**Europäisches Patentamt**

**European Patent Office**

**Office européen des brevets**

(19)

(11) Numéro de publication: **0 047 697**
**A1**

# (12) DEMANDE DE BREVET EUROPEEN

(21) Numéro de dépôt: **81401368.6**

(22) Date de dépôt: **31.08.81**

(51) Int. Cl.³: **A 01 K 11/00**

(30) Priorité: **02.09.80 FR 8018910**

(43) Date de publication de la demande: **17.03.82**
**Bulletin 82/11**

(84) Etats contractants désignés: **AT BE CH DE GB IT LI LU NL SE**

(71) Demandeur: **Zmokly, Tadeusz, 151 rue Victor Hugo, F-93150 Le Blanc Mesnil (FR)**

(72) Inventeur: **Ecoffet, Pierre, 44, rue Mouraud, F-75020 Paris (FR)**

(74) Mandataire: **Blétry, Robert et al, OFFICE BLETRY 2, Boulevard de Strasbourg, F-75010 Paris (FR)**

(54) **Dispositif pour l'assemblage inviolable de pièces, telles que plaquettes d'identification de bétail.**

(57) Ce dispositif pour l'assemblage durable et inviolable de pièces telles que plaquettes d'identification notamment pour le bétail, à l'aide d'une pince avec mors de serrage (13), comprend essentiellement un rivet tubulaire creux (6) dans lequel peuvent coulisser d'un côté ou des deux côtés les tiges (7) de pointes (8) présentant une contre-dépouille (10). Le rivet est positionné d'un côté sur la plaquette (2) logée sur le mors (13) de la pince, la plaquette (1) étant logée sur l'autre mors de la pince; une extrémité du rivet (6) est enfoncée avec sa pointe dans un logement prévu sur la plaquette (2); par serrage de la pince, on provoque d'abord le perçage de l'oreille (12), puis l'engagement de l'autre extrémité du rivet avec sa pointe (8) dans un logement de la plaquette (1) et par serrage à fond de la pince, l'évasement (15) des extrémités des rivets (6), ce qui fait que les rondelles (4) et les plaquettes (1 et 2) restent verrouillées de part et d'autre de l'oreille (12).

1

La présente invention a pour objet un dispositif d'assemblage de pièces, telles que par exemple des plaquettes d'identification d'animaux, plaques d'identité, éléments d'emballages, de reliure ou analogues.

Il est connu que le bétail doit maintenant porter des plaquettes d'identification, qui sont généralement au nombre de deux fixées de chaque côté des oreilles, par exemple à l'aide d'agrafes, clips ou rivets mis en place par des pinces appropriées, avec ou sans perçage des oreilles, on a proposé des fixations comprenant des rivets tubulaires creux terminés par des pointes de perçage qui s'appuient par un épaulement contre une plaquette mâle et se coïncent par la pointe dans des évidements de la plaquette femelle par le jeu d'une aiguille fixée sur un mors d'une pince et qui traverse le rivet et sa pointe. Toutefois ces fixations s'avèrent souvent insuffisantes en raison des efforts auxquelles sont soumises les plaquettes ; de plus elles ne sont pas inviolables.

L'invention a donc pour but un dispositif d'assemblage de telles plaquettes d'identité, notamment sur les oreilles des bêtes, qui soit simple d'emploi, assure une tenue durable des plaquettes sur les bêtes, soit inviolable et sans possibilité de réutilisation.

A cet effet, l'organe essentiel d'un tel assemblage de pièces telles que des plaquettes disposées de chaque côté de l'oreille d'un animal est un rivet tubulaire creux dans lequel peut coulisser au moins d'un côté une pointe acérée pour percer l'oreille, pointe qui présente une contre-dépouille et qui coopère avec une rondelle solidaire de la plaquette femelle de telle manière que celle-ci soit verrouillée sur le rivet au moment d'un serrage par une pince provoquant la solidarisation d'une extrémité du rivet avec la plaquette mâle et l'évasement de l'autre extrémité du rivet, par le jeu de la contre-dépouille de la pointe et par suite l'indissolubilité de l'assemblage.

Un mode d'exécution comprend deux plaquettes en matière plastique portant les inscriptions et présentant chacune un bossage dans lequel est logée par surmoulage une rondelle avec pattes d'ancrage. L'organe d'assemblage est un rivet tubulaire creux dans lequel peut coulisser de chaque côté une pointe acérée de profil circulaire ou polygonal avec contre-dépouille.

La longueur du rivet correspond au moins à l'épaisseur moyenne d'une oreille de bête et la pointe de profil circulaire ou polygonal est dimensionnée pour s'appuyer par sa contre-dépouille contre le rivet et pour le perçage.

Pour la mise en place des plaquettes, on pose l'une d'elles, appelée plaquette mâle par son bossage, dans un évidement prévu à cet effet dans le mors de la pince ; on pose l'autre plaquette appelée plaquette femelle, par son bossage, dans l'évidement prévu sur l'autre mors de la pince, de manière que les bossages des deux plaquettes soient coaxiaux. Ces plaquettes sont avantageusement maintenues en place par des ressorts équipant les mors de la pince.

Dans le bossage de la plaquette dite mâle est logé par sa pointe le rivet, l'autre pointe restant libre. En fermant la pince, on provoque le perçage de l'oreille de l'animal placée entre la pointe libre et la plaquette femelle et en exerçant une pression plus forte, l'écrasement à la fois des pointes dans les bossages des plaquettes avec évasement de l'extrémité des rivets par la contre-dépouille des pointes et par suite le verrouillage du rivet dans les plaquettes dites mâle et femelle.

Une telle fixation s'avère solide, durable et inviolable.

Une variante consiste à utiliser un rivet tubulaire creux terminé par un épaulement et une seule pointe coulissante. Une rondelle plate est logée contre cet épaulement sur la face externe de la plaquette mâle, tandis qu'une rondelle similaire est prévue sur la plaquette femelle. Le serrage par pince provoque le verrouillage des rondelles sur le rivet ; ce verrouillage peut être accentué si l'extrémité libre du rivet présente des fentes ou créneaux longitudinaux.

3

Une autre variante consiste à utiliser un rivet creux analogue au précédent, portant par un épaulement contre la face extérieure de la plaquette mâle qui reçoit d'un côté la tige d'une pointe coulissante poussée par un axe cranté soumis à l'action d'un ressort taré pour que cette pointe puisse percer l'oreille de l'animal sans déformer le rivet et pour laisser reculer cet axe quand, sous l'action de la pince, la pointe s'engage dans la rondelle de la plaquette femelle en déformant l'extrémité libre du rivet, comme dans les modes d'exécution précédents.

Pour faciliter le verrouillage de l'extrémité ou des deux extrémités du rivet, il est possible d'utiliser des rivets à extrémités fendues ou affaiblies.

D'autres caractéristiques de l'invention seront décrites plus en détail ci-après en référence au dessin annexé sur lequel :

La figure 1 est une vue en élévation éclatée partie en coupe des éléments d'assemblage de plaquettes.

La figure 2 est une vue de face d'une plaquette.

La figure 3 est une vue en coupe analogue à la figure 1, les pièces étant prêtes au verrouillage.

La figure 4 est une vue en coupe analogue à la précédente après verrouillage.

La figure 5 est une vue analogue à la figure 1 d'une première variante.

La figure 6 est une vue analogue à la figure 4 de cette variante.

La figure 7 est une vue en coupe d'une deuxième variante d'assemblage de plaquettes après verrouillage.

Les figures 8 et 9 sont des vues en coupe d'une troisième variante d'exécution de l'assemblage avec les éléments de la figure 7.

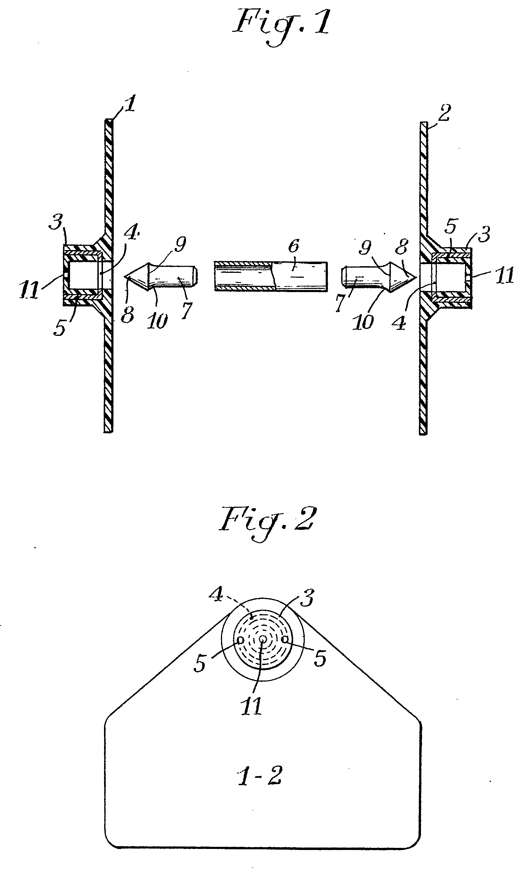

Les figures 1 à 4 ont trait à un assemblage suivant l'invention de deux plaquettes d'identification de bétail, mais il doit être entendu que ce même assemblage peut convenir à d'autres fins.

Les plaquettes 1, 2 prises en exemple sont des plaquettes courantes en matière plastique dont la particularité est de présenter des bossages évidés 3 et des rondelles 4 avec pattes d'ancrage 5 venues de moulage avec les plaquettes et affleurant leurs faces externes.

La pièce d'assemblage est un rivet tubulaire cylindrique creux 6 aux extrémités duquel peuvent coulisser les tiges 7 terminées chacune par une pointe 8 dont la base 9, aussi large que le diamètre extérieur du rivet, se raccorde à la tige 7 par une contre-dépouille 10.

Le fond de chaque bossage 3 est préférablement percé d'un petit trou 11.

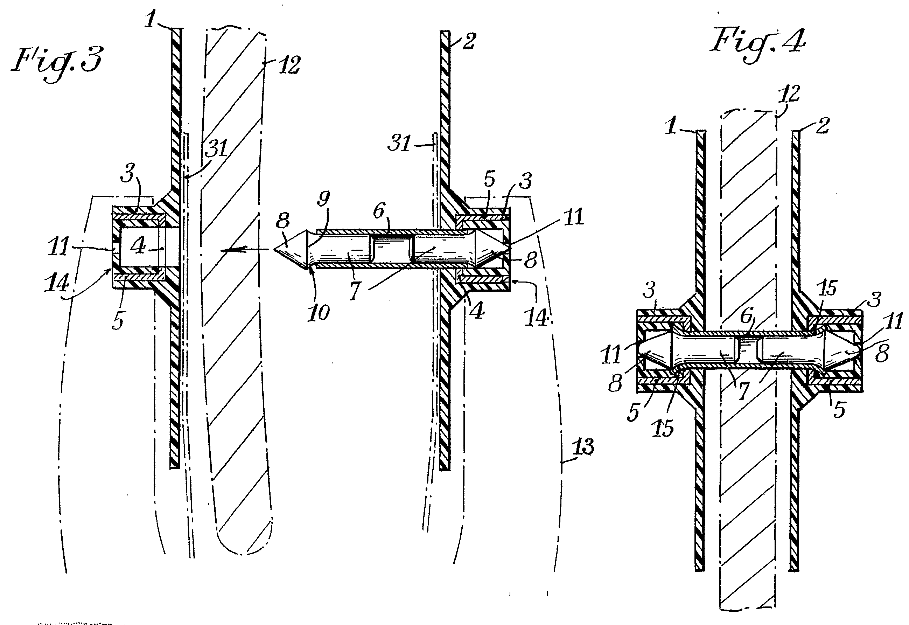

La mise en place de cette pièce d'assemblage s'effectue de la façon suivante (fig. 3 et 4) :

Une des pointes 8 du rivet 6 est engagée à force dans le bossage évidé 3 de la plaquette dite mâle 2, la pointe et son rivet traversant la rondelle 4 jusqu'à s'engager dans le trou 11.

L'oreille 12 de l'animal est glissée entre les plaquettes mâle 2 et femelle 1 tandis que les mors 13 d'une pince (non représentée en entier) ayant reçu auparavant, dans des cavités 14 spécialement conçues à cet effet les bossages 3 des deux plaquettes, celles-ci étant positionnées à volonté, mais toujours en alignement l'une de l'autre grâce au jeu de ressorts 31 tendant à les plaquer contre les mors.

Par serrage de la pince, on provoque d'une part le perçage de l'oreille 12 et, d'autre part et de façon analogue, l'évasement du rivet à chaque extrémité dû à la pression exercée par les mors de la pince 13 sur les pointes 8, refoulant celles ci dans le rivet 6, leur contre-dépouille 10 provoquant l'évasement 15.

Le diamètre aux extrémités du rivet 6 étant ainsi évasé, les rondelles 4 et les plaquettes 1 et 2 restent verrouillées de part et d'autre de l'oreille 12.

On a ainsi réalisé entre les deux plaquettes un lien indissoluble, inviolable et durable, sans risque de perte ou de tricherie.

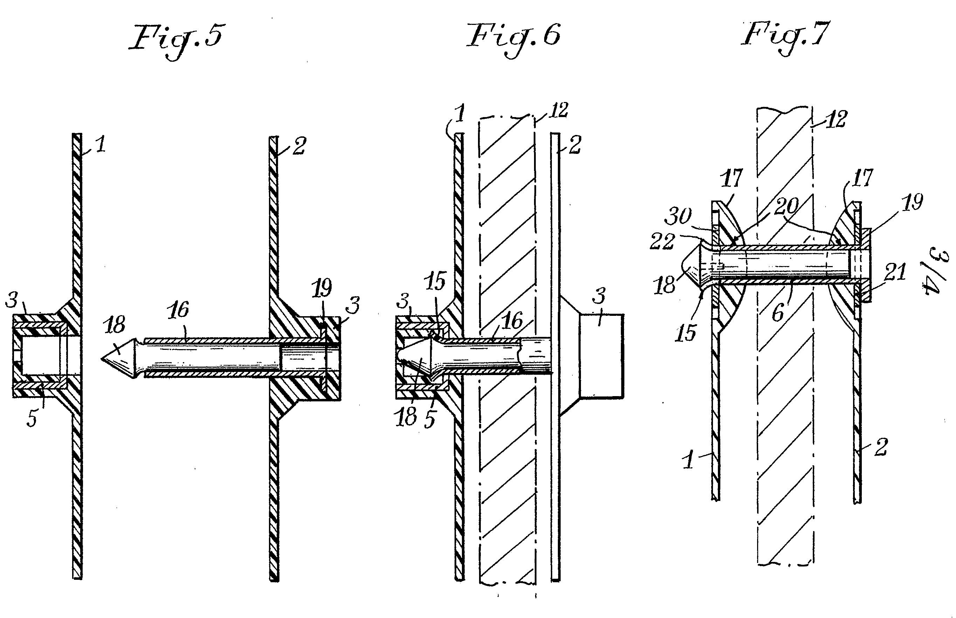

Cet assemblage peut se réaliser de façon similaire avec un rivet 16 ne comprenant qu'une pointe 18 à une extrémité et présentant un épaulement 19 à son autre extrémité (fig. 5 et 6). Le rivet 16 est fixé à la plaquette mâle 2 par son épaulement 19 venu de moulage avec le bossage 3. La pointe 18, après perçage de l'oreille de l'animal, s'appuie au fond du bossage, en 11, sur le mors de la pince maintenant la plaquette femelle 1, et la rondelle 4 est prisonnière de la partie évasée 15 du rivet, comme dans l'exemple précédent.

Une variante d'exécution (fig. 7) s'applique à des plaquettes 1, 2, présentant à leurs points de fixation des épaisseurs 17 percées d'un trou 20 pour le passage d'une pièce d'assemblage du type de celle des fig. 5 et 6. Le rivet 6 est enfilé dans le perçage 20 de la plaquette mâle 3 et retenu par son épaulement 19, éventuellement avec l'interposition d'une rondelle 21, tandis que la pointe 18, après perçage de l'oreille 12 s'appuie contre le mors 13 de la pince et dilate l'extrémité 15 du rivet, qui peut présenter des fentes ou créneaux longitudinaux 22.

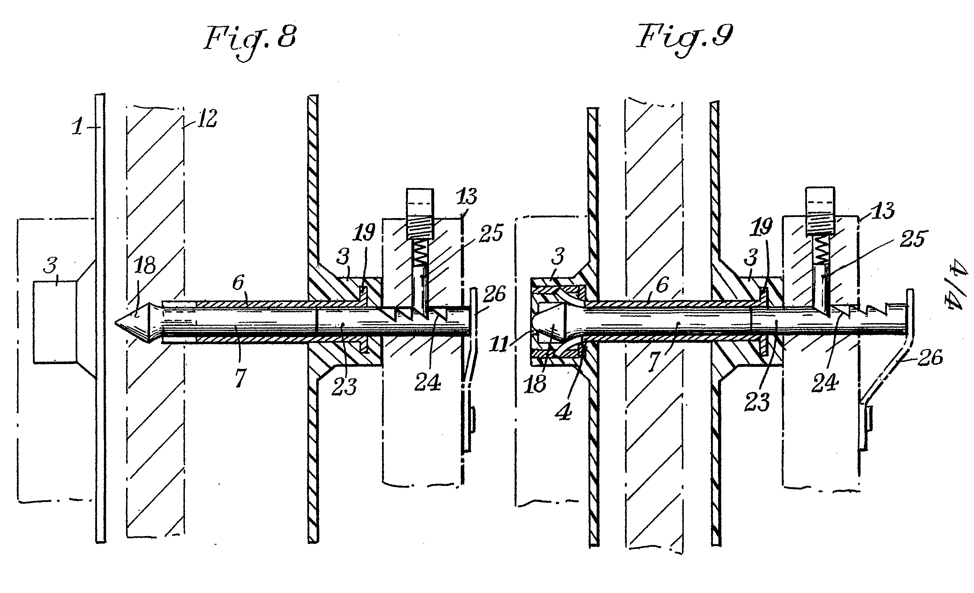

Une autre variante réalisée avec un rivet 6 de même type que celui des fig. 5 à 9 consiste à utiliser une pointe 18 dont la tige 7 s'étend presque dans tout le canal du rivet et s'appuie sur une tige-poussoir 23 présentant des crans 24 à denture droite inclinée vers l'arrière pour s'opposer à son avance et permettre son recul sous l'action d'un cliquet à ressort 25 engagé dans un alésage d'un des mors 13 de la pince. Un ressort 26 tend à pousser la pointe 18 et il est taré pour permettre à cette pointe 18 de percer sans déformer le rivet, et pour autoriser le recul du poussoir 23, quand la pointe 18 s'appuie au fond du bossage en 11 de la plaquette femelle 1 en dilatant l'extrémité du rivet pour le verrouillage de la rondelle 4, comme dans tous les exemples précédents et ce qui constitue la caractéristique essentielle de l'invention par rapport aux dispositifs connus à agrafage, à aiguille, etc...

Il doit être entendu que l'invention n'est pas limitée aux exemples d'exécution qui viennent d'être décrits et représentés, et que les modes d'exécution des plaquettes, des rivets, des pointes et des rondelles peuvent varier suivant l'application. C'est ainsi notamment que les pointes peuvent avoir une

6

forme autre que conique, par exemple à pans coupés, que leurs tiges peuvent avoir une autre section que cylindrique au moment qu'elles peuvent coulisser dans le canal du rivet, et que les rondelles, avec ou sans pattes d'ancrage, peuvent être ajoutées si le besoin s'en fait sentir.

R E V E N D I C A T I O N S
================================

1.- Dispositif pour l'assemblage durable et inviolable de pièces telles que plaquettes d'identification pour le bétail à l'aide d'une pince avec mors de serrage, caractérisé en ce qu'il est constitué par un rivet tubulaire creux (6) dans lequel peut coulisser au moins d'un côté la tige (7) d'une pointe (8) dont la base (9) est aussi large que le diamètre extérieur du rivet et se raccorde à la tige (7) par une contre-dépouille (10), l'une des extrémités de ce rivet étant fixée à la plaquette mâle 2, et par au moins une rondelle (4) noyée dans la masse de la plaquette femelle (1), la pointe (8) perçant la pièce à identifier, telle qu'une oreille d'animal, et dilatant l'extrémité du rivet pour verrouiller, par la contre-dépouille (10) de la pointe, la rondelle (4) sous l'action des mors (13) d'une pince.

2.- Dispositif suivant la revendication 1, caractérisé en ce que le rivet (6) est équipé d'une pointe (8) à chaque extrémité, et les plaquettes (1, 2) présentent des bossages (3) dans lesquels sont noyées des rondelles (4) avec pattes d'ancrage (5), une des pointes se logeant dans le bossage (3) de la plaquette mâle (2) et l'autre venant, après perçage de la pièce à identifier, se loger dans le bossage (3) de la plaquette femelle (1) en provoquant l'évasement des extrémités du rivet (6) par le jeu des contre-dépouilles (10) sous l'effet de serrage des mors (13) d'une pince.

3.- Dispositif suivant les revendications 1 et 2, caractérisé en ce que les mors (13) de la pince de serrage sont aménagés pour recevoir les plaquettes (1, 2), éventuellement par leurs bossages (3), et les positionner coaxialement par le jeu de lames de ressort d'application (31).

4.- Dispositif suivant la revendication 1, caractérisé en ce que la pointe a une forme conique avec une contre-dépouille.

5.- Dispositif suivant la revendication 1, caractérisé en ce que la pointe et sa contre-dépouille a une forme à pans coupés.

6.- Dispositif suivant la revendication 1, caractérisé en ce que la tige (7) de la pointe (8) a une section correspondant à la section du canal du rivet dans lequel elle coulisse.

7.- Dispositif suivant la revendication 1, caractérisé en ce que l'extrémité libre du rivet (6) présente des fentes ou créneaux (22).

8.- Dispositif suivant la revendication 1, caractérisé en ce que le rivet (16) se termine d'un côté par un épaulement (19) destiné à être noyé dans la masse de la plaquette mâle (2) et de l'autre côté par la pointe coulissante (18) coopérant avec la rondelle (5) noyée dans la plaquette femelle (1).

9.- Dispositif suivant la revendication 1, caractérisé en ce que le rivet (6) enfilé dans un perçage (20) de la plaquette mâle (2) est retenu sur la face externe par un épaulement (19) et éventuellement une rondelle (21), la pointe (18) coopérant après perçage avec une rondelle (30) logée dans un évidement externe de la plaquette femelle (1).

10.- Dispositif suivant la revendication 1, caractérisé en ce qu'il comporte une pointe (18) dont la tige (7) coulisse dans la presque totalité du rivet et est en contact avec une tige-poussoir (23) présentant un crantage tel qu'elle puisse reculer mais non avancer par le jeu d'un cliquet à ressort (25) logé dans le mors (13) de la pince, et en ce qu'un ressort (26) portant contre le poussoir (23) est taré pour aider la pointe (18) à percer sans déformer le rivet et à céder quand elle s'écrase dans le logement de la plaquette femelle (1) au moment du verrouillage de la rondelle (4).

HUIT PAGES.—     P/P de   ZMOKLY Tadeusz

L'un des Mandataires : Robert BEATRY

1/4

**Fig.1**

**Fig.2**

*Fig.3*

*Fig.4*

*Fig.5*　　　　*Fig.6*　　　　*Fig.7*

3/4

0047697

**Fig. 8**

**Fig. 9**

Office européen **RAPPORT DE RECHERCHE EUROPEENNE**
des brevets

Numéro de la demande

EP 81 40 1368

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | A 01 K 11/00 |
| | US - A - 2 570 048 (COOKE)<br><br>* colonne 2, ligne 3 à colonne 3, ligne 6 * | 1,3 | |
| | FR - A - 2 435 902 (DALTON ROTO-TAG)<br><br>* page 8, lignes 16-20 * | 3 | |
| | GB - A - 151 321 (DOUGLAS)<br><br>* page 2, lignes 39-73 * | 1,4,6 | **DOMAINES TECHNIQUES RECHERCHES (Int. Cl.³)**<br><br>A 01 K |
| | BE - A - 651 516 (METAGAM)<br><br>* page 4, lignes 7-18; figure 3 de la description * | 7 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 03.12.1981 | CRUCHTEN |

OEB Form 1503.1   06.78